(19) Europäisches Patentamt
European Patent Office
Office européen des brevets

(11) **EP 2 976 525 B1**

(12) **EUROPEAN PATENT SPECIFICATION**

(45) Date of publication and mention
of the grant of the patent:
**18.07.2018 Bulletin 2018/29**

(51) Int Cl.:
**F03D 7/06** *(2006.01)* **F03D 7/04** *(2006.01)*

(21) Application number: **14713251.8**

(86) International application number:
**PCT/GB2014/050903**

(22) Date of filing: **21.03.2014**

(87) International publication number:
**WO 2014/147423 (25.09.2014 Gazette 2014/39)**

(54) **A TURBINE, TURBINE CONTROLLER AND METHOD OF OPERATION THEREOF**

TURBINE, TURBINENSTEUERUNG UND VERFAHREN ZUM BETRIEB DAVON

TURBINE, DISPOSITIF DE COMMANDE DE TURBINE ET PROCÉDÉ DE FONCTIONNEMENT ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.03.2013 GB 201305221**

(43) Date of publication of application:
**27.01.2016 Bulletin 2016/04**

(73) Proprietor: **Swift TG Energy (Scotland) Limited Edinburgh EH12 6AH (GB)**

(72) Inventors:
• **DICKINSON, Sam Edinburgh EH12 6AH (GB)**

• **FORREST, David Edinburgh EH12 6AH (GB)**
• **ABDELHAKIM, Ahmed Edinburgh EH12 6AH (GB)**

(74) Representative: **Hargreaves, Timothy Edward et al Marks & Clerk LLP 40 Torphichen Street Edinburgh EH3 8JB (GB)**

(56) References cited:
**US-A1- 2007 014 658    US-A1- 2010 133 819
US-A1- 2011 020 123    US-A1- 2011 074 154
US-B1- 6 688 841**

## Description

## Field of the invention

The present invention relates to a controller for a turbine, a turbine, and a method for controlling the operation of a turbine. The invention has particular application to, but is not limited to, vertical axis wind turbines.

## Background

There is increasing interest in obtaining energy from renewable sources such as wind and wave energy, both for environmental reasons and for security of energy supply.

In recent years, there has been a large increase in the number of wind turbines installed worldwide. Wind turbines vary in size and power generation capability. There are two general categories of wind turbines, horizontal-axis wind turbines (HAWT) and vertical-axis wind turbines (VAWT). A HAWT is configured such that the blades are arranged radially about the axis of rotation, with the axis of rotation horizontally orientated. A VAWT is configured such that the blades are arranged parallel to the axis of rotation, with the axis of rotation vertically orientated.

Although HAWTs are more common than VAWTs, there are several advantages to VAWTs, including the ability to accept wind from any direction and to operate in turbulent airflows. VAWTs may also operate at slower rotation speeds than their HAWT equivalents, and therefore may be less noisy. These advantages make VAWT devices particularly suitable for installation in built-up areas and urban environments.

Control systems and methods for VAWT systems are in general less well developed than those for HAWT systems, and VAWTs may present more opportunity for improvement. Some known VAWTs provide for independent actuation of turbine blades about their own respective axes. However, these devices focus on a limited operating procedure (start-up, typical operation and shut-down), which is based on an ideal working environment and does not account for external factors such as topography, environmental factors, time of day, time of year, or other factors that are specific to the installation site.

Some known wind turbines can have different modes of operation to allow for different phases in the operation of the turbine. For example, some known turbines can have a start-up mode, a shut-down mode, or a running mode, where the running mode governs operation once the turbine has been started up and achieved a certain rotational speed or tip speed ratio.

There is usually only one mode available at any given time in the turbine's operation. When the turbine is starting up, it will be in the one and only start-up mode. When it has been started up and is in normal operation, it will be in the one available running mode. The transition between start-up and running modes may be based on the rotational speed. US 2010/0133819 A1 gives an example of using different pitch control strategies according to the turbine sound level. This can be applied to vertical or horizontal wind turbines.

## Summary

In a first, independent aspect of the invention there is provided a controller for a vertical-axis turbine according to claim 1. The controller may be configured to select a control mode from the at least two stored control modes in dependence on at least one parameter other than azimuthal position of that blade, fluid velocity, blade velocity and tip speed ratio.

The turbine may comprise a wind turbine, optionally a vertical axis wind turbine, and in that case the fluid speed is wind speed. Alternatively, the fluid turbine may comprise a water turbine, for example a water current turbine and in that case the fluid speed may comprise water current speed.

The controller may use different overall turbine control modes that are selected in dependence on the at least one parameter (for example, time, environmental, or acoustic parameters).

Tip speed ratio is the ratio of the turbine's rotational speed to the incident wind speed or other fluid speed. The control modes may be configured so that for each fluid speed, tip speed ratio, or combination of fluid speed and tip speed ratio, the controller may select one of at least two distinct control modes in dependence on at least one further parameter.

A controller which operates the turbine in at least two alternative control modes may allow more flexibility in the turbine use. This may include adapting the turbine to the environment in which it is situated. The performance characteristics of the turbine may be changed by control of the blades only, without physical modifications to the turbine assembly. For example, for a given fluid speed, the speed of rotation may be faster or slower depending on the control mode, using the active control of the aerofoil blades and varying the pitch of the aerofoil blades as they move in azimuth.

The controller may provide for continuous active control of the turbine blades. This means that the blade angle may be constantly changing during each rotation of the turbine.

The controller may be configured such that for at least one fluid speed and/or tip speed ratio, the pitch of at least one blade under the first of the at least two stored control modes differs from the pitch of the at least one blade under the second of the control modes.

It is not necessarily the case that every pitch angle in the first control mode is different from the corresponding pitch angle in the second control mode. However, for at least one fluid speed and/or tip speed ratio, the angle of at least one blade will be different for at least some azimuthal positions.

The controller may be configured to control the pitch of each blade in dependence on at least one of rotor or blade speed or velocity, fluid speed or direction or tip speed ratio.

As well as the blade angles being changed with the azimuthal angle, different angles may be used to speed up or slow down the rotation relative to the wind speed or water speed, maximising the power generation or improving other performance characteristics.

Each of the at least two control modes may be configured to control the pitch of each blade over a range of fluid speeds, for example wind speeds, from zero fluid speed to the operational fluid speed limit of the turbine.

Each of the two control modes may be configured to control the pitch of each blade over a range of tip speed ratios from substantially zero to a maximum tip speed ratio of the turbine. The maximum tip speed ratio may a maximum tip speed ratio for safe operation.

Each control mode may cover substantially all the fluid speed and/or tip speed ratio conditions experienced by the turbine. At any turbine speed condition, the controller may choose between at least two modes.

The first of the at least two stored control modes may comprise a first start-up mode and/or a first running mode, and the second of the control modes may comprise a second start-up mode and/or a second running mode.

A single control mode algorithm having different modes may be used to control the turbine at substantially all wind speeds and/or tip speed ratios. Alternatively, each control mode may comprise, at least, a start-up mode and a running mode. In this scenario, at start-up the controller may select one of the at least two control modes, each of which comprises a start-up mode. The turbine may then operate in the first start-up mode or second start-up mode accordingly.

The controller may be configured to select one of the at least two control modes in dependence on a time parameter, wherein the time parameter comprises at least one of a time of day, a day of the week, or a time of the year. Thus, the at least one parameter used to select the control mode may comprise the time parameter.

The turbine may be operated in different modes at different times. For example, in an urban area, a wind turbine may be operated for full power generation during the day, but in a reduced acoustic noise mode at night.

The controller may be configured to select one of the at least two stored control modes in dependence on an input from a sensor. Thus the at least one parameter used to select the control mode may comprise the input from the sensor. The sensor may comprise at least one of an environmental sensor, a weather sensor, an acoustic sensor, a light sensor, an ice sensor or a wear sensor. The weather sensor may comprise at least one of a temperature sensor, a barometric pressure sensor, a precipitation sensor, a humidity sensor or a wind speed or direction sensor.

Rather than abiding by a pre-programmed schedule for selection of control modes, the controller may adapt the performance of the turbine to its surroundings by using sensor input to select which mode a turbine should be operating in. For example, a different mode may be used for operation at high temperatures than is used at lower temperatures.

At least one of the at least two stored control modes may be configured to satisfy a constraint on at least one of speed of rotation, power generation, torque or acoustic noise.

An example of a constraint is an acoustic noise threshold. The provision of a control mode that is configured to maintain acoustic noise below a threshold allows installation of the turbine in areas with noise restrictions. By having more than one mode, it is possible to have one mode that is configured for noise reduction and one mode that is configured for maximum power generation. Alternatively, two modes may be configured having different levels of noise threshold.

The first of the at least two stored control modes may have an opposite direction of rotation of the rotor to the second of the control modes.

For some fluid flow conditions (for example where the wind is obstructed by a building, or water current flow is obstructed by a sea bed or river bed rock formation or other obstruction) one direction of rotation may be preferable to the other for power generation. In addition, the direction of rotation may be reversed to change the wear points and therefore extend the life of the turbine.

The controller may be configured to select one of the at least two control modes in dependence on at least one environmental parameter. Thus, the at least one parameter used to select the control mode may comprise the at least one environmental parameter.

The wind turbine may be operated differently in different environmental conditions, for example weather conditions or noise levels.

The environmental parameter may comprise a weather parameter.

The turbine may be operated in different modes according to the weather, for example to maximise the power generation or to reduce the stress on the turbine.

The environmental parameter may comprise at least one of temperature, barometric pressure, precipitation, humidity, fluid speed or velocity, for example wind speed or velocity.

The controller may be configured to select one of the at least two control modes in dependence on a condition of at least one component of the wind turbine, optionally in dependence on a level of wear of the at least one component.

The pitch of each blade may be rotatable by at least ±180°.

Fully rotatable blades may allow the selection of blade angles to optimise turbine performance.

The controller may comprise a memory. The memory may store at least one of the stored control modes. At least one mode selection criterion may be stored in the memory.

Mode selection criteria may include rules for selecting which control mode to use to operate the turbine based on the time provided by the clock, sensor input, or other input. A mode selection criterion may be a simple rule such as selecting one mode below a given temperature. On the other hand, mode selection criteria may comprise a complex set of rules, for example, a set of rules based on several sensors for different environmental conditions, the installation site of the turbine, the time of day and the day of the week.

The stored control modes and/or at least one selection criterion may be configured for the site on which the turbine is installed.

Turbine requirements may vary according to the site of the turbine. For example, noise levels may be critical for turbines in urban areas, while weather-dependent modes may be more important for turbines in exposed sites.

The installation site may comprise at least one of: a shoreline site, a clifftop site, a rural site, a hillside site, an industrial site, an urban site, a suburban site, a rooftop site, or any other suitable site.

The controller may be configured to reverse the direction of rotation of the rotor by operation of at least one actuation device, wherein each actuation device is operative to alter the pitch of at least one blade.

In another example not part of the claimed invention there is provided a controller for a turbine, the turbine comprising a rotor comprising a plurality of aerofoil blades arranged for rotation around an axis of the rotor; wherein the controller is configured to reverse the direction of rotation of the rotor by operation of at least one actuation device, wherein each actuation device is operative to alter the pitch of at least one blade.

For some settings, particularly in urban areas in the case of a wind turbine, the air flow or other fluid flow may be such that a turbine will produce more power if operated in one direction of rotation than in the opposite direction. However, this may be dependent on wind direction or on other external factors. It may be advantageous to operate the turbine in one direction of rotation under some conditions, and in the opposite direction of rotation under other conditions.

In addition, a turbine that always rotates in one direction will have consistent points of wear. By rotating in the other direction, the wear points may be shifted, which may extend the lifetime or maintenance intervals of the turbine.

A controller having active control of the turbine blades may change the direction of turbine rotation by control of the blades only, without physical modifications to the turbine assembly.

The controller may be configured to alter the pitch of at least one blade by at least ±180°.

The controller may be configured to select the direction of rotation of the rotor in dependence on at least one wind direction or water flow direction.

This may be advantageous when the preferred direction of rotation is dependent on wind or other fluid conditions.

The controller may be configured to reverse the direction of rotation at predetermined intervals.

Reversing the turbine at given intervals may balance the wear on the turbine.

The controller may be configured to reverse the direction of rotation such that over a predetermined time period, the time for which the rotor is in rotation in a first direction differs from the time in rotation in a second direction by no more than 20%, optionally 10%, further optionally 5%.

The predetermined time period may be greater than at least one of one week, one month and one year. The predetermined time period may be between one week and five years, optionally between one week and 1 year, optionally between one month and 1 year, optionally between six months and two years.

The controller may be configured to reverse the direction of rotation in dependence on a number of cycles of rotation of the rotor.

The controller may be configured to reverse the direction of rotation such that over a predetermined time period and/or a predetermined number of cycles of rotation, the number of cycles of rotation of the rotor in a first direction differs from the number of cycles of rotation in a second direction by no more than 20%, optionally 10%, further optionally 5%.

The turbine comprises a vertical axis turbine. The turbine may comprise a vertical axis wind turbine. The turbine may comprise a water turbine, optionally a water current turbine.

In a further, independent aspect of the invention, there is provided a method of controlling a vertical-axis turbine according to claim 14. In a further, independent aspect of the invention there is provided a turbine apparatus according to claim 15. The turbine may comprise a plurality of actuation devices wherein each actuation device is operable to rotate a respective aerofoil blade.

Each actuation device may be operable to rotate a respective blade by at least ±180°.

Although a more limited range of motion may be used under particular conditions of operation, the blade and actuation device may have a full ±180° range of motion.

Any feature in one aspect of the invention may be applied to other aspects of the invention, in any appropriate combination. For example, apparatus features may be applied to method features and vice versa.

## Detailed description of embodiments

Embodiments of the invention are now described, by way of non-limiting example, and are illustrated in the following figures, in which:-

Figure 1 is a schematic illustration of a wind turbine according to one embodiment;
Figure 2 is a schematic illustration of components of the wind turbine of Figure 1;
Figure 3 is a schematic diagram illustrating the production of vortices in dependence on aerofoil angle;
Figures 4a and 4b are a vector diagrams of an aerofoil of the wind turbine of Figure 2;
Figures 5a and 5b are diagrams illustrating wind direction effects on a hillside turbine installation;
Figures 6a and 6b are schematic diagrams illustrating the effect of an obstruction on air flow to a wind turbine;

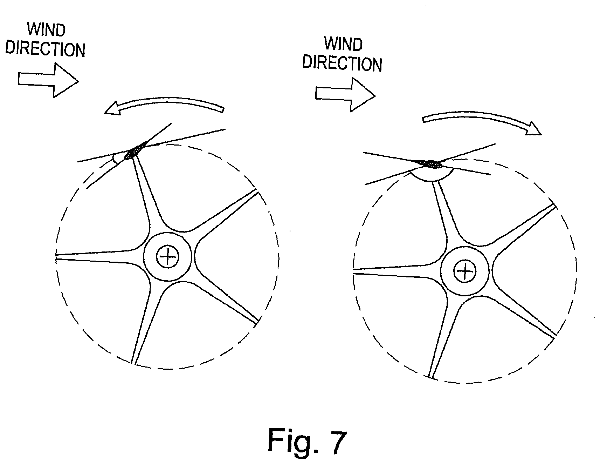

Figure 7 is a schematic illustration of opposite directions of turbine rotation.

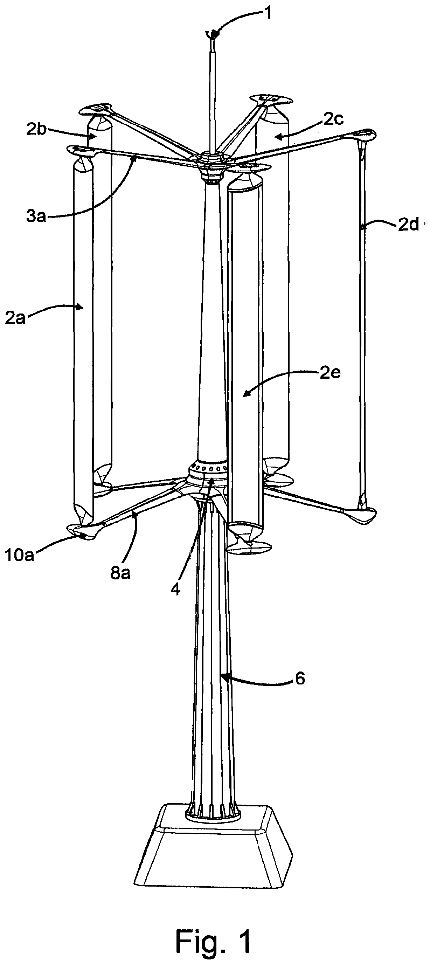

In a first embodiment, a controller 12 is configured to control a wind turbine. The wind turbine is illustrated schematically in Figure 1 (controller 12 is not visible in this view).

A plurality of aerofoil blades 2a-2e are attached to a rotor 4 that is mounted on a tower 6. Each aerofoil blade 2a-2e is connected via respective rotatable joints to a corresponding lower arm 8a-8e and corresponding upper arm 3a-3e, each of which extends from an axis of rotation of the rotor. Each rotatable joint is arranged to allow rotation of a corresponding one of the aerofoil blades around an axis parallel to the axis of rotation of the rotor, thereby allowing variation of the pitch of the aerofoil blade both during rotation and when the rotor is stationary.

A respective actuation device 10a-10e is provided at the end of each of the lower arms 8a-8e, and is operable to rotate a corresponding aerofoil blade 2a-2e via the rotatable joint thereby to change the pitch of the aerofoil blade. In this embodiment, each actuation device 10a-10e comprises a brushless, frameless DC motor, which is operable to rotate the aerofoil blade by at least ±180°. Each actuation device 10a-10e is associated with a respective magnetic position encoder 11a-11e and custom PCB aerofoil controller 9a-9e. The actuator components are matched to the anticipated aerodynamic and inertial torques and the required range of speeds of rotation.

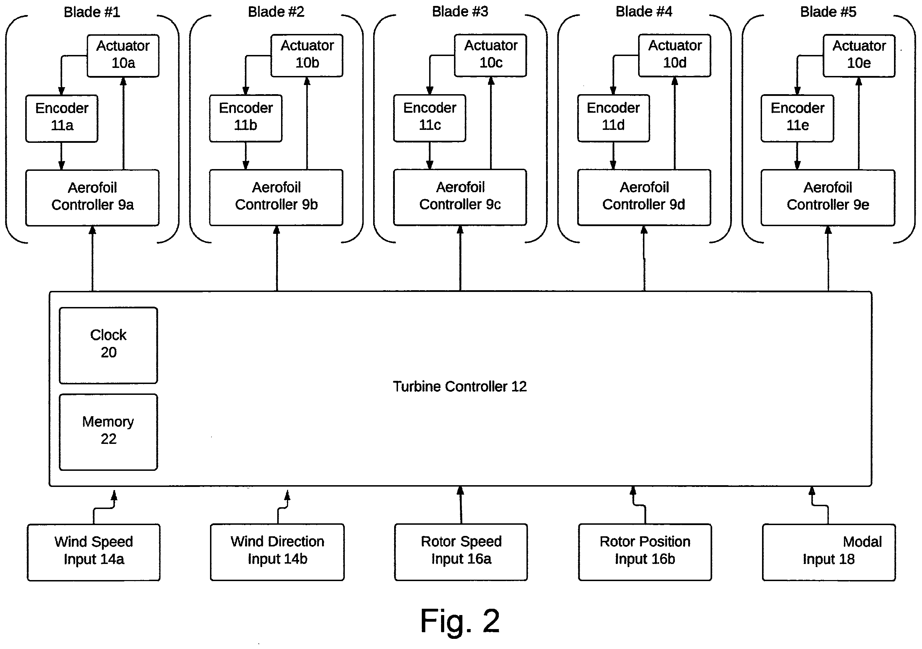

The controller 12 receives input and power via a slip ring. Each actuation device 10a-10e is configured to communicate via a wired connection with the controller 12, which is located somewhere within or near the body of the tower 6. In alternative embodiments, communication may be via a contactless connection, for instance wirelessly or via Bluetooth. Power is provided to each actuation device through the slip ring. The actuation devices 10a-10e, position encoders 11a-11e, aerofoil controllers 9a-9e and controller 12 are illustrated schematically in Figure 2. The controller 12 in this embodiment is a custom-built device, but in other embodiments the controller 12 may comprise a suitably programmed PC. In some embodiments the controller 12 may comprise dedicated control circuitry comprising, for example, at least one ASIC (application-specific integrated circuit) or FPGA (field-programmable gate array). The controller 12 is configured to control the angle of attack of each blade by communication with the actuation devices 10a-10e through the aerofoil controllers 9a-9e.

The controller 12 is connected to a wind speed sensor 14 that measures wind speed and direction and that is mounted on a mast 1 attached to the top of the tower 6. The wind speed sensor 14 provides wind speed input 14a and wind direction input 14b to the controller. The wind speed sensor or sensors 14 may be placed in alternative locations in different embodiments. The controller 12 is also connected to an encoder 16 that measures the speed of rotation and rotary position of the rotor 4 and provides a rotor speed input 16a and rotor position input 16b to the controller 12.

The controller 12 comprises an internal clock 20. In alternative embodiments, the clock 20 may be an external device.

The controller 12 further comprises a memory 22, which, in this embodiment, stores two control modes for the wind turbine. In alternative embodiments, more than two control modes may be stored. Each control mode comprises information required to operate the turbine over the full range of wind speed, wind direction and tip speed ratio.

The controller 12 may also receive modal input 18 from a further sensor or user input device, wherein mode input 18 is a user direction or an additional input such as weather parameter information.

Each control mode comprises a control mode algorithm, which takes a set of input data, for example wind speed, blade azimuthal position and tip speed ratio, and outputs one or more required blade angles to be implemented by the controller 12. Each control mode may also comprise data to supply to the control mode algorithm, for example, fitted variables, fixed values for particular constants, or values for constraints such as thresholds.

The two control modes may each use the same control mode algorithm, but supply the algorithm with different data such as different values for constants or thresholds. Alternatively, the two control modes may use different control mode algorithms.

In the current embodiment, the memory also includes a set of mode selection criteria. The set of mode selection criteria comprises a set of rules which the controller 12 uses to determine whether to operate the turbine in the first control mode or in the second control mode at any given time. This mode selection is not just dependent on the turbine's stage of operation, for example choosing a start-up mode versus a running mode. Instead, each control mode covers all stages in the turbine's operation.

Although in this embodiment a single algorithm is used to control the turbine throughout a full range of wind speeds, it would be possible for each control mode to include a start-up mode and a running mode. In this case, for a given wind speed and tip speed ratio, the turbine may operate in, for example, a first start-up mode that is part of the first control mode or a second start-up mode that is part of the second control mode.

Before considering the details of different modes of operation in different embodiments, some background information concerning the calculation of pitch angles in a normal mode of operation is provided.

The tip speed ratio is the parameter that is used in the calculation of the optimised pitch angle, and is defined in equation 1.

$$(1) \qquad \lambda = \frac{\omega R}{V}$$

in which $\lambda$ is the tip speed ratio, $\omega$ is the rotational speed of the blade around the orbital azimuth, R is the radius of rotation of the blade around the rotor axis, and V is the free wind speed.

Pitch angles for the normal mode are calculated to optimise power generation for each tip speed ratio. By way of background, starting from first principles, force vector diagrams can be drawn for the position of the aerofoils at specific locations around the orbital azimuth.

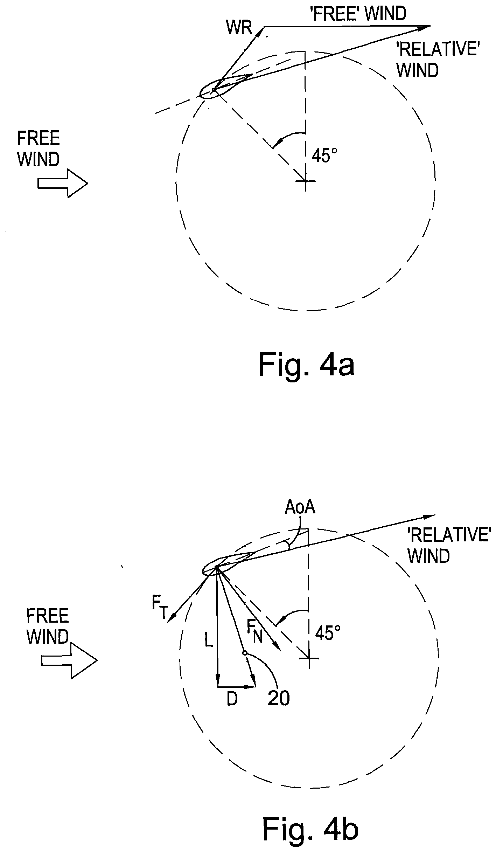

Figure 4a is a vector diagram showing a free wind vector and the aerofoil angular velocity ($\omega R$) for an aerofoil 2a at a 45° angle of rotation. The relative wind vector can be derived from the free wind vector and the aerofoil angular velocity vector. The angle of attack (AoA), or pitch angle, of the aerofoil is considered to be the angle between the relative wind vector and the chord of the aerofoil.

Figure 4b shows the resultant force vector 20. This is derived from the lift force L and drag force D generated at the specific angle of attack. It can be understood that varying the angle of attack will produce different lift and drag forces and therefore different resultant force vectors 20. Breaking the resultant force vector into its component tangential force vector $F_T$ and normal force vector $F_N$ determines the overall turbine torque produced. It may be understood that the angle of attack can therefore be adjusted to determine the maximum tangential force component $F_T$ at a given time resulting in optimum turbine torque generation.

It may also be understood that as the ratio between the rotation speed and the wind speed changes so will the shape of the force vector diagram. As the tip speed ratio increases, the variation of the pitch angle adjustments decreases.

Optimum pitch angles may be calculated using force components as described, or by the use of modelling or empirical data. The control mode algorithm is used to generate the pitch angle for each blade in real time. The control mode algorithm may comprise a single equation or algorithm, a set of equations or algorithms, or one or more look-up tables.

In a normal mode of operation of the described embodiment, the pitch angle for each aerofoil blade and each azimuthal position is calculated in order to maximize torque and thus power output. However, it is a feature of the described embodiment that at least one further control mode is provided as well as or instead of the normal mode, in which pitch angles are determined in dependence on other parameters or constraints rather than only to maximize torque.

An operating configuration of the embodiment is now described in which the two modes of operation are two different acoustic modes, each of which provides for control of blade angles to ensure that the turbine generates a different amount of noise for a given wind speed and other operating conditions. Thus, the turbine can for example operate in a low noise mode and a normal mode. The different acoustic modes are described by way of example, and in alternative embodiments or configurations, the different modes are selected based on other parameters and have other effects. Further examples of the nature of the different modes in alternative embodiments are described below, but firstly the different acoustic modes are described.

In operation, the controller 12 retrieves mode selection criteria from the memory 22. The controller 12 receives time data from the clock 20. In the current embodiment, the mode selection criteria state that if the clock 20 indicates a time between 7am and 9pm, the controller 12 is to select the first control mode. If the time is outside these hours, the controller 12 is to select the second control mode.

The controller 12 also receives data representing the wind speed 14a, wind direction 14b, speed of rotation of the rotor 16a, and the azimuthal position of the rotor 16b from the sensors 14 and 16 on a continuous or periodic basis.

The controller 12 selects the control mode according to the mode selection criteria and the time data from the clock 20. Based on the selected control mode and the inputs 14a, 14b, 16a and 16b from sensors 14 and 16, the controller 12 calculates, in real-time, the desired pitch angle for each aerofoil blade 2a-2e. Each aerofoil controller 9a-9e receives the desired pitch angle for its respective blade from the controller 12 and the current position of its respective blade from its respective position encoder 11a-11e. The aerofoil controller 9a-9e determines how far to drive the blade, and drives the actuator 10a-10e to the desired position. The position encoder 11a-11e then feeds the resulting position of the actuator 10a-10e back to the aerofoil controller 9a-9e.

In normal operation the controller 12 recalculates the desired pitch angle for each aerofoil blade individually many times during each rotation of the rotor and the pitch angle for each blade thus varies throughout each rotation.

In the present embodiment, the control modes are chosen for control over the noise characteristics of the turbine. The memory 22 stores a first control mode that is configured for optimum power generation (normal mode) and a second control mode that is configured for turbine operation with reduced acoustic noise when compared with the normal mode (low-noise mode).

In general, there are two sources of noise for a wind turbine. The first is mechanical noise, such as is produced for example by bearings and servos. This may be mitigated in the design stage through design practices such as using brushless servos and eliminating gearboxes.

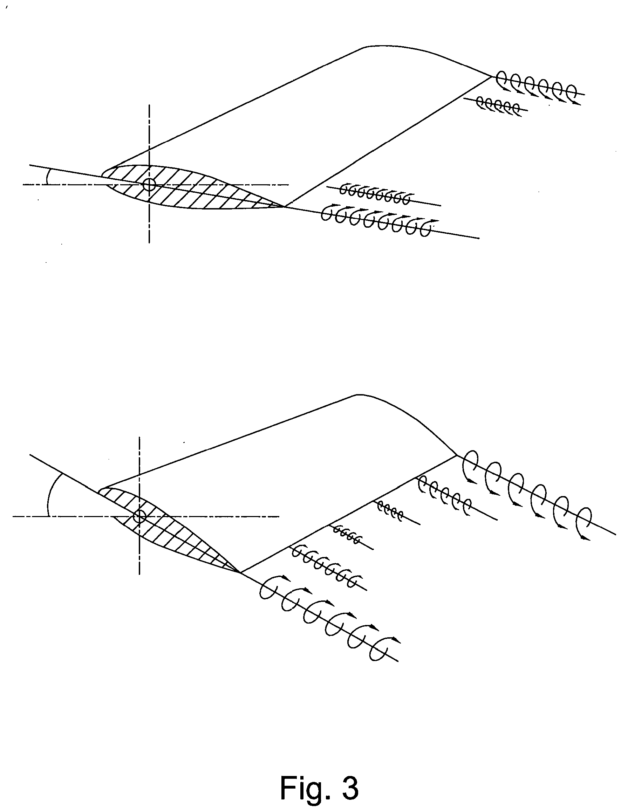

The second source of noise is aerodynamic noise. This is caused by the creation of vortices on the trailing edges and/or tips of the turbine blades. The extent to which vortices are created is dependent in part on the pitch angle of the aerofoil blades 2a-2e. Vortex creation is illustrated in Figure 3. The upper diagram shows the vortices generated when the angle of attack is small. The lower diagram shows the larger vortices generated when the angle of attack is greater.

Therefore, the acoustic noise from the turbine may be reduced by reducing the pitch angle of the blades compared to the pitch angle that would be used for optimal power generation. This means less overall torque, resulting in lower rotational speeds and less power produced compared to operating in normal mode for the same wind speed, wind direction and tip speed ratio.

In this embodiment, the normal mode comprises a normal mode algorithm, which is configured to optimize power output from the wind turbine, and may be based on modelling and/or on empirical turbine data. The low-noise mode comprises a low-noise mode algorithm, which is configured with reduced pitch angles to reduce the noise levels relative to equivalent normal mode performance.

In operation, the turbine switches from one mode to another through commands from the controller 12 without any physical modification to the turbine assembly.

In the above embodiment, the controller 12 is operable to switch control mode in dependence on the time of day. This allows the turbine to operate differently at night from during the day. This may be advantageous when the turbine is installed in an urban area, particularly in a residential area. During the day, when ambient noise is high (for example, because of traffic), the turbine operation operates in normal mode, which is optimised for power generation. During the night, when there is less ambient noise, the turbine is switched into low-noise mode and the turbine produces less noise for a given wind speed than if it was in normal mode.

The provision of alternative modes allowing reduced-noise operation at certain hours may be an advantage in planning. The noise of the turbine can be reduced at key times without having to down-rate the turbine to a lower power generation at all hours, or, alternatively, operating at full power during the day but having to switch the turbine off at night.

In a further embodiment, this principle is extended. The controller 12 receives data from the clock 20 that comprises information on the day of the week. The mode selection criteria stored in the memory 22 state that if the day of the week is Saturday or Sunday, the controller 12 is to select the low-noise mode for the entire day, but on weekdays, the controller 12 is to select the normal mode between 7am and 9pm and the low-noise mode outside those times. In a further embodiment, the mode selection criteria specify that normal mode is selected in hours that normally correspond to rush hour and/or other times of high expected traffic noise, and in low-noise mode at other times.

In another embodiment, low-noise mode is used during the day and normal mode at night. For example, a turbine is installed in a botanical garden or other tourist destination that is only open to the public during the day, and is well away from residential areas. During the day, when there are visitors, the turbine operates in low-noise mode, with correspondingly reduced power generation. At night-time, when there are no visitors on site, the turbine operates in normal mode, maximising power generation. Similar considerations may apply to other non-residential sites.

In a further embodiment, the mode selection criteria cover time of year. At a tourist destination that only or predominantly operates in summer, more hours are designated for the low-noise mode in summer. In the off-season, the turbine is operated at full power for more or all of the time.

In the above embodiments, mode selection criteria are stored in the memory 22 and the controller 12 selects the control mode with reference to the mode selection criteria. In other embodiments, the controller 12 selects the control mode in accordance with a user input. For example, in the time of year situation above, an operator commands the controller 12 to change the mode through a wireless signal, typing on a keyboard connected to the controller 12, switching a switch, or through any appropriate communication of data or activation of an input device. This provides to the controller a modal input 18. While this method is more suited for occasional changes of mode than for frequent changes, it may still be the case that even frequent changes are performed by an operator. In this case, it may not be necessary for any mode selection criteria to be stored in memory, as all mode changes will be decided and communicated by the operator. Alternatively, there may be a combination of stored mode selection criteria and operator commands. For example, in one embodiment the stored mode selection criteria make day-to-day changes between normal mode and low-noise mode, but an operator may overrule the installed settings, for example to set to low-noise mode for a special event, or to switch to low-noise mode for a local holiday that has not been programmed into the mode selection criteria.

The low-noise mode may be configured to achieve reduced average noise relative to the normal mode in each individual set of operating conditions or when averaged across time or across all wind speeds, or may instead be configured for reduced peak noise generation.

In the above embodiments, the mode selection criteria include only information from clock 20 (including calendar information). In further embodiments, the selection of normal mode versus low-noise mode is based on alternative or additional inputs 18. For example, in one embodiment, a building-mounted turbine is configured to operate in a low-noise mode when people are working in the building. This is determined by connecting the controller 12 to the building entry system, which provides data on building occupation based on the data from swipe cards used for building entry as modal input 18.

In other embodiments, acoustic noise is measured using an acoustic noise sensor. In one embodiment, an acoustic sensor is placed at an appropriate distance from the turbine so that it measures the level of background noise in the vicinity of the turbine, and not the noise from the turbine itself. The acoustic noise sensor is connected to the controller 12, and supplies acoustic noise data 18 to the controller 12. The mode selection criteria are configured to determine mode choice based on the level of background acoustic noise that is measured by the acoustic noise sensor, by comparing the measured acoustic noise to a threshold. If the measured background acoustic noise exceeds the threshold, the mode selection criteria state that the controller 12 should select normal mode. If the measured background acoustic noise is below the threshold, the controller 12 selects low-noise mode.

In alternative embodiments, the acoustic noise generated at the turbine site is measured by an acoustic noise sensor sited at the turbine. In one embodiment, the acoustic noise measured at the turbine is compared to the acoustic noise measured as the background.

Although each of the above embodiments describes the use of two control modes (a normal mode and a low-noise mode), it is clear that any number of modes may be used. In some embodiments, all of these may be restricted-noise modes, with none maximising power generation. For example, a controller 12 may be configured to store in memory 22 three or more modes that have been calculated to accommodate different acoustic noise thresholds. The mode selection criteria may be based on a number of external inputs, time-based parameters, or a combination of both.

Acoustic noise is merely one example of why it may be desirable to have two or more control modes for a wind turbine. Many further embodiments may be envisaged, not limited to those described here.

For example, the turbine may have control modes that are selected in dependence on the environment of the turbine, including weather conditions. Such environmental embodiments are described below.

Alternatively or additionally, control modes may be selected in dependence on factors that are specific to the installation site of the turbine, for example the topography of the site or the presence of nearby buildings or other obstructions. Such installation-specific modes are also described below. These include embodiments in which the first control mode causes the turbine to rotate in the opposite direction from the second control mode.

In one embodiment, a first mode is configured for optimum power generation (normal mode) and a second mode (flicker-reduction mode) is configured to control the speed of rotation of the turbine with the aim of avoiding shadow flicker. Although it is known that VAWTs produce less shadow flicker than HAWTs, there may nevertheless be times of day or particular sun conditions where shadow flicker is a concern. The flicker-reduction mode controls the turbine speed of rotation to avoid key frequencies at which flicker is thought to be an issue. In one embodiment, the controller 12 selects flicker-reduction mode at set times of the day (these being dependent on the time of year, to cover daylight hours). In a second embodiment, a light sensor provides data 18 to the controller 12. The controller 12 selects the control mode in dependence on the output of the light sensor (flicker-reduction mode is not required when the light sensor indicates that it is dark). In a third embodiment, the controller 12 selects the control mode in dependence on measured or reported weather data 18 (for example, from a weather station or from the Met Office) and only uses flicker-reduction mode when it is sunny. At all other times the normal mode is selected for maximum power generation.

In a further embodiment, an environmental sensor is added to the apparatus of Figure 4. This sensor senses an environmental parameter, for example a weather parameter, or an acoustic noise parameter. In some embodiments, the sensor is a weather sensor. The weather sensor sends weather data 18 to the controller 12, which selects a mode based on the weather data using appropriate mode selection criteria. In further embodiments, the controller 12 selects a mode based on the weather data and also on the time of day, day in the week, or time of the year, as determined by the input from the clock 20.

The weather sensor may comprise a temperature sensor, a barometric pressure sensor, a precipitation sensor, a humidity sensor or a wind speed or velocity sensor. A wind speed sensor may be the integrated wind speed sensor 14, or an additional wind speed sensor. The weather sensor may be placed on the turbine, on a mast 1 above the turbine, or in the vicinity of the turbine. The weather sensor is in communication with the controller 12 by a fixed cable, wirelessly, or by any suitable communication method or protocol. In a particular embodiment, the weather sensor is a temperature sensor, which is mounted on the turbine tower.

The air temperature has an impact on the performance of the turbine. When the temperature is high, the air is less dense and so presents less resistance to the turbine blades. Therefore, it may be desirable to change the calculated pitch angles dependent on temperature. The temperature may be measured at the turbine site, measured at a nearby site, or it may be a prediction or forecast, for example from the Met Office.

In one embodiment, the control modes for the turbine are a normal mode that is selected by the controller 12 in air temperatures up to 30°C, and a high temperature mode that is selected in temperatures above 30°C. Other weather conditions may also be considered. For example, where there is a prospect of ice starting to form on the turbine, the blades may become heavier and more difficult to move, and the aerodynamic profile of the blades may change. Therefore it may be preferable to cease movement of the blades, move the blades more slowly, or move the blades less often. Therefore, in an embodiment, the controller 12 may select normal mode when the measured temperature is above a threshold temperature (for example, 4°C), and below that temperature select a mode in which there is reduced blade actuation movement when compared with operation in the normal mode for the same wind speed. The mode selection may also be dependent on the level of moisture in the air, with normal mode being selected even when the measured temperature is below the threshold temperature if the level of moisture is low.

Wind turbines may be installed in any of a wide variety of locations. The embodiments above have primarily discussed urban installations. However, turbines may be installed in industrial, suburban or rural areas, on a shoreline, on a hillside, in a valley or in any other geographical location. Turbines may be installed on a rooftop or between buildings. Each of these installation conditions will come with different requirements for turbine performance. For example, a rooftop or shoreline installation may be more exposed to high winds than a more sheltered site. An urban or suburban site may experience acoustic noise requirements as detailed above. In particular, the topography of the site will affect the operation of the turbine.

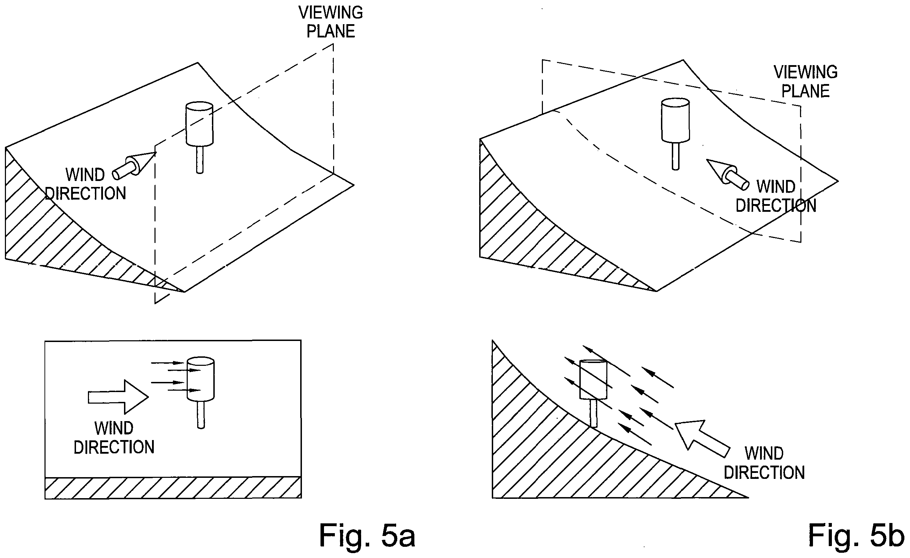

Figure 5a and 5b show a wind turbine installed on a hillside. Figure 5a shows a wind direction, and plane of view, perpendicular to the direction of slope of the hill. When wind blows in the direction represented in Figure 5a, the turbine operation is similar to turbine operation on a flat, unobstructed site. The incident wind flow is fairly consistent across the swept area of the turbine. In contrast, when the wind is blowing up the hill as represented in Figure 5a, the air-flow through the turbine is not perpendicular to the turbine's axis of rotation, and is also likely to be more turbulent. This may require a different control mode to the control mode required for the wind direction of Figure 5a.

Similar conditions result when a turbine is mounted on a cliff, or on a building edge. In either of these scenarios, wind blowing over the edge towards the turbine flows differently through the swept area of the turbine than air flow from the opposite direction.

Particularly in urban sites, obstructions are also an issue in the placement of the turbine. There may for example be buildings present that affect the air flow when the wind is coming from certain directions. This causes different turbine conditions for different wind directions, which may require the use of different control modes.

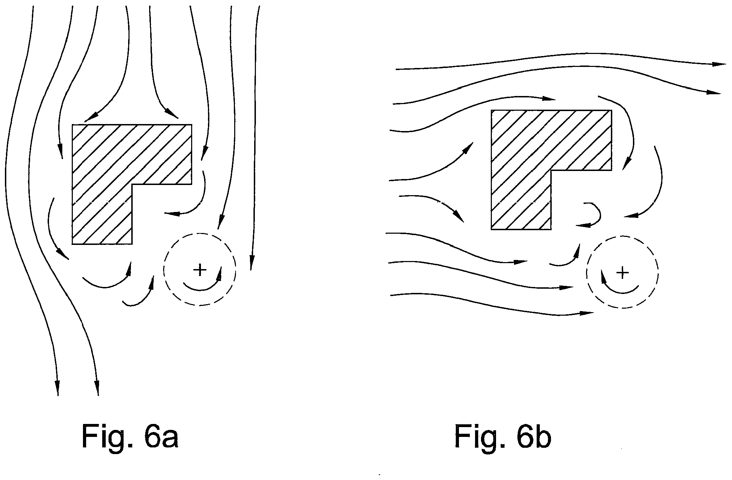

In a further embodiment, a wind turbine as in Figure 1 is controlled by a controller 12 as described in the first embodiment and as illustrated in Figure 2. For one version of this embodiment, the clock 20 may be omitted. The wind turbine is sited in the wind shadow of a building as shown in Figure 6a and Figure 6b. This building has an effect on the air flow to the turbine. Rather than the air flow being equal across the width of the turbine, the air flow to one side of the turbine is affected by the building, whereas the air flow to the other side is less affected. For example, in Figure 5a, the right side of the turbine experiences more useful air flow than the left side of the turbine. The direction of incidence of the wind is also different across the face of the turbine.

It may be understood that in a condition of equal wind speed and direction across the dimension of the turbine that is perpendicular to the wind direction, the turbine will operate with the same power generation if operated in one direction of rotation as in the other. However, if the wind is stronger on one side of the turbine than the other, there may be a preferred direction of rotation in which the turbine will generate more power. In Figure 6a, the presence of the building means that more power will be generated by the turbine if it operates in an anti-clockwise direction of rotation than if it operates in a clockwise direction. Similarly, in Figure 6b, the turbine will generate more power if it rotates in a clockwise direction.

Therefore, in the current embodiment, the memory 22 stores two control modes where the first control mode comprises a control mode algorithm that results in operation of the turbine with a clockwise rotation of the rotor, and the second control mode comprises a control mode algorithm that results in operation of the turbine with an anticlockwise rotation of the rotor.

The controller 12 selects the control mode and communicates with the actuation devices to control the pitch of the blades such that the rotor rotates in the direction of the selected control mode. The rotor may be changed from one direction of rotation to the other though the operation of the actuation devices to control the angles of the aerofoil blades, without any further physical modifications being made to the turbine assembly. There is no need for different manufacturing or tooling for a clockwise rotation versus those required for an anticlockwise rotation. The wind turbine, controlled by controller 12, of the current embodiment is capable of both rotational directions.

In one embodiment, the memory 22 stores mode selection criteria in which the selected control mode is determined based on operating conditions such as wind direction. This may be used to control the direction of rotation of the turbine to gain the best turbine performance in a location where airflow is affected by the presence of a nearby building or other nearby obstruction or obstructions.

In the current embodiment, the controller 12 selects a control mode for clockwise direction of rotation or a control mode for anticlockwise direction of rotation based on mode selection criteria that have been designed for the current site of the turbine, with knowledge of buildings that block the air flow. It is known that when the wind is coming from certain directions, clockwise direction is preferable, and for other directions, anticlockwise direction is preferable. The controller 12 therefore selects the control mode based on wind direction. In one variant of this embodiment, the calculation of mode selection criteria is made by modelling the site for the turbine with different wind direction. In another variant, the preferred control mode for each wind direction is determined empirically after installation of the turbine.

In some circumstances, for example if the turbine is located on an open site, there may be no difference in power generation or other performance factors depending on the direction of rotation of the turbine. However, if the turbine operates always in one direction of rotation, wear on the bearings and other mechanical parts will always occur in the same places. If the turbine is operated in the other direction of rotation for some of the time, the wear points will be shifted. If the controller 12 is configured to operate the turbine using both directions of rotation, with some alternation between the two directions, the wear on the system may be more balanced. This may extend the lifetime of the unit, reduce maintenance requirements, or extend maintenance intervals.

In one embodiment, the controller 12 comprises a clock 20. The mode selection criteria in memory 22 specify a schedule on which the frequency of rotation is changed. In this embodiment, frequency of direction changes is chosen to minimise the loss of power from direction changes by changing the turbine direction once per week. In other embodiments, the direction may be changed more or less frequently. In further embodiments, the direction is changed in response to commands from an operator, rather than automatically in dependence on the clock.

The schedule of direction changes may be controlled such that the length of time spent in each direction of rotation is approximately equal, or is within a certain margin. For example, the schedule of direction changes may be such that over a predetermined time period, for example a month, the time spent in clockwise rotation equals the time spent in anticlockwise rotation plus or minus 5%, 10%, or 20%.

In an alternative embodiment, a counter counts the number of rotations of the turbine and transmits this data to the controller 12. The mode selection criteria specify a number of rotations of the turbine, for example 100000 rotations. When this number of rotations is reached, the controller 12 slows the turbine down to a stop, changes the control mode to one in the opposite direction of rotation and restarts the turbine. The rotations may be planned such that the number of rotations in clockwise rotation is substantially equal to the number of rotations in anticlockwise rotation, or differs by, for example, no more than plus or minus 5%, 10%, or 20% over a predetermined time period, for example a month.

For example, one component that is subject to wear is the aerofoil bearings. These may be inspected as part of a regular maintenance programme. The interval of change of rotation direction may be pre-determined at the time of manufacture or installation, or it may be revised during the life of the device, for example through using the results of regular inspections.

In some embodiments, the controller determines when to reverse the direction of rotation in dependence on the condition, for example level of wear, of a component of the system. In some such embodiments, the controller may reverse the direction of rotation in dependence on output from a wear sensor that measures the level of wear of the component in question. The controller may monitor the level of wear using the output from the sensor.

In a further embodiment, the mode selection criteria specify that whenever the turbine slows down to a standstill, the controller 12 will restart the turbine in the opposite direction of rotation from the direction in which it had previously been operating. Any of these criteria, or others, may be combined in an attempt to balance the wear. For example, the mode criteria may aim to balance the number of rotations in each direction that occur at high wind speeds. Rotations that occur at high wind speeds may put more wear on the turbine than those that occur at lower speeds. So it may be more important to balance these rotations than it is to balance lower-speed rotations.

In a further embodiment, the direction of rotation is changed even when this would degrade the performance. In one such example, the turbine has a favoured direction of rotation for power generation, but is operated in its less-favoured direction of rotation in low-demand periods to reduce wear.

Control modes with opposite directions of rotation as described above may be combined with control modes directed towards other performance parameters, such as the low-noise, flicker-reduction or weather-dependent modes described in earlier embodiments.

In further embodiments, control modes are added to the memory 22 (on fabrication, on installation or at any other time) in dependence on the proposed or actual installation site of the turbine. For example, where a turbine will be installed on a beach, control modes are added that control performance for acoustic noise, as described above, and also for performance in different weather conditions. In these embodiments, only the control modes appropriate to the installation are stored in the memory. For example, a turbine installed in a cold climate will not be installed with a high-temperature mode.

In alternative embodiments, all control modes that have been developed for a particular turbine are stored in the memory 22. The selection of these control modes is dependent on the mode selection criteria. The mode selection criteria may be adapted for the specific location of installation. Alternatively, the mode selection criteria may be general criteria which may never be fulfilled for a particular turbine. For example, a turbine installed in a cold climate may have a high-temperature mode stored in the memory 22, but this control mode may never be selected by controller 12 based on the mode selection criteria because the controller 12 never receives an input that indicates a high enough temperature.

In other embodiments, any number of control modes may be stored in the memory, or may be added to the memory. The mode selection criteria may select between any number of control modes, and may be based on any number of input or selection parameters.

All control modes involve controlling the aerofoil angle of attack and do not involve physical modifications to the turbine assembly. Choice of modes and switching between modes is controlled by the controller 12, either automatically, or in response to commands from an operator.

In the above embodiments, the control modes and mode switching criteria stored in the memory 22 are installed when the turbine is fabricated. In alternative embodiments, the control modes and/or mode switching criteria are changed over the life of the turbine. This may occur for a number of reasons. There may be a change in the environment of the turbine. For example, a factory may be built in the vicinity of a turbine in an otherwise quiet area. The mode switching criteria may then be changed so that instead of the controller 12 selecting normal mode from 7am to 9pm and low-noise mode outside these hours, the controller 12 selects normal mode for all the hours that the factory is operating (for example 24 hours a day, 5 days a week) and selects low-noise mode only when the factory is not operational (for example on weekends).

The control modes may also be changed to apply improved control mode algorithms. Algorithms may be improved by new calculations or results of simulation, or may be adapted based on the acquisition of operational data from the current installed turbine or from similar turbines installed elsewhere.

In an embodiment, new control mode algorithms and/or mode switching criteria are loaded into the memory using a USB stick, wirelessly, by typing into a keyboard, or by using any other appropriate input method, on-site or remotely.

Although the described embodiments comprise vertical axis wind turbines, in which the axis of rotation is substantially vertical, in alternative embodiments the rotor of the described embodiments can be placed on its side, or at any suitable intermediate angle. Additionally, it is not necessary that the turbine described be a wind turbine. Water turbines may also benefit from continuous control of blade angle and the use of at least two control modes as described in the embodiments above. It may be understood that the operation of a water-driven turbine is analogous to that of a wind-driven turbine, although with a different scale of the expected forces and water current speed. In the case of a water current turbine, the blades may be hydrofoil blades.

Such a water-driven turbine may be placed in any suitable orientation. Control modes may be developed to suit particular water conditions.

It will be understood that the present invention has been described above purely by way of example, and that modifications of detail can be made within the scope of the invention.

**Claims**

1. A controller for a vertical-axis turbine,

   the turbine comprising a rotor comprising a plurality of aerofoil or hydrofoil blades arranged for rotation around an axis of the rotor, wherein:-
   the controller is configured, for each of at least two control modes, to control the pitch of each blade in dependence on a respective control mode algorithm, wherein the control mode algorithm is configured to control the pitch of each blade repeatedly during each rotation of the rotor in dependence on an azimuthal position of that blade and in dependence on at least one of fluid speed, fluid velocity, blade speed, blade velocity and tip speed ratio;
   the controller is configured to select a control mode from at least two stored control modes in dependence on at least one parameter other than fluid speed or blade speed, or in dependence on user input; and
   for at least some azimuthal positions and at least one fluid speed and/or tip speed ratio, blade pitch as a function of azimuthal position is different for a first of the control modes than for a second of the control modes.

2. A controller according to Claim 1, further configured for each of the first and second control modes to control the pitch of each blade in dependence on at least one of: rotor or blade speed or velocity, fluid speed or direction, tip speed ratio.

3. A controller according to Claim 1 or 2, wherein at least one of a), b) or c):-

   a) each of the at least two control modes is configured to control the pitch of each blade over a range of fluid speeds, for example wind speeds, from zero fluid speed to an operational fluid speed limit of the turbine;

b) each of the at least two control modes is configured to control the pitch of each blade over a range of tip speed ratios from zero to the maximum tip speed ratio of the turbine;

c) the first of the at least two stored control modes comprises a first start-up mode and a first running mode, and the second of the control modes comprises a second start-up mode and a second running mode.

4. A controller according to any preceding claim, further configured to select one of the at least two stored control modes in dependence on a time parameter, wherein the time parameter comprises at least one of a time of day, a day of the week, or a time of the year.

5. A controller according to any preceding claim, further configured to select one of the at least two stored control modes in dependence on an output from a sensor, wherein

  optionally:-
  the sensor comprises at least one of: an environmental sensor, a weather sensor, an acoustic sensor, a light sensor, an ice sensor, or a wear sensor, and
  further optionally:-
  the weather sensor comprises at least one of a temperature sensor, a barometric pressure sensor, a precipitation sensor, a humidity sensor, a wind speed or direction sensor.

6. A controller according to any preceding claim wherein at least one of the at least two stored control modes is configured to satisfy a constraint on at least one of: speed of rotation, power generation, torque, acoustic noise.

7. A controller according to any preceding claim wherein the first of the at least two stored control modes has an opposite direction of rotation of the rotor to the second of the control modes.

8. A controller according to any preceding claim, further configured to select one of the at least two control modes in dependence on at least one environmental parameter, and

  optionally:-
  the environmental parameter comprises at least one of: temperature, barometric pressure, precipitation, humidity, fluid speed or velocity.

9. A controller according to any preceding claim, configured to select one of the at least two control modes in dependence on a condition of at least one component of the turbine, optionally in dependence on a level of wear of the at least one component.

10. A controller according to any preceding claim, wherein each the pitch of each blade is rotatable by at least ±180°.

11. A controller according to any preceding claim, wherein at least one of a), b) or c):

  a) the controller further comprises a memory storing at least one of the stored control modes and/or at least one mode selection criterion;
  b) the stored control modes and/or at least one selection criterion are selected in dependence on at least one property of the site on which the turbine is installed;
  c) the controller is configured to reverse the direction of rotation of the rotor by operation of at least one actuation device, wherein each actuation device is operative to alter the pitch of at least one blade.

12. A controller according to any preceding claim, wherein at least one of the stored control modes is configured to control a speed of rotation of the rotor to avoid shadow flicker.

13. A controller according to any preceding claim, wherein at least one of the stored control modes and/or at least one selection criterion is selected in dependence on at least one of a site topography, the presence of a building, the presence of an obstruction.

14. A method of controlling a vertical-axis turbine, the turbine comprising a rotor comprising a plurality of aerofoil or hydrofoil blades arranged for rotation around an axis of the rotor, and the method comprising:

  for each of at least two control modes, controlling the pitch of each blade in dependence on a respective control mode algorithm, wherein the control mode algorithm is configured to control the pitch of each blade repeatedly during each rotation of the rotor in dependence on an azimuthal position for that blade and in dependence on at least one of fluid speed, fluid velocity, blade speed, blade velocity and tip speed ratio;
  selecting a control mode from at least two stored control modes in dependence on at least one parameter other than fluid speed or blade speed, or in dependence on user input; and
  for at least some azimuthal positions and at least one fluid speed and/or tip speed ratio, blade pitch as a function of azimuthal position is different for a first one of the control modes than for a second one of the control modes.

15. A vertical-axis turbine apparatus comprising

a rotor comprising a plurality of aerofoil or hydrofoil blades arranged for rotation around an axis of the rotor; and
a controller configured, for each of at least two control modes, to control the pitch of each blade in dependence on a respective control mode algorithm, wherein the control mode algorithm is configured to control the pitch of each blade repeatedly during each rotation of the rotor in dependence on an azimuthal position for that blade and in dependence on at least one of fluid speed, fluid velocity, blade speed, blade velocity and tip speed ratio, wherein:-
the controller is configured to select a control mode from at least two stored control modes in dependence on at least one parameter other than fluid speed or blade speed, or in dependence on user input; and
for at least some azimuthal positions and at least one fluid speed and/or tip speed ratio, blade pitch as a function of azimuthal position is different for a first control mode than for a second control mode.


**Patentansprüche**

1. Steuerung für eine Vertikalachsenturbine,
wobei die Turbine einen Rotor umfasst, der mehrere Luftflügel- oder Wasserflügelschaufeln umfasst, die für eine Drehung um eine Achse des Rotors angeordnet sind, wobei:

die Steuerung dafür konfiguriert ist, für jeden von wenigstens zwei Steuerungsmodi, die Steigung jeder Schaufel in Abhängigkeit von einem jeweiligen Steuerungsmodus-Algorithmus zu steuern, wobei der Steuerungsmodus-Algorithmus dafür konfiguriert ist, die Steigung jeder Schaufel wiederholt während jeder Drehung des Rotors in Abhängigkeit von einer Azimutposition dieser Schaufel und in Abhängigkeit von wenigstens einem von Fluidgeschwindigkeit, Fluidschnelligkeit, Schaufelgeschwindigkeit, Schaufelschnelligkeit und Schnelllaufzahl zu steuern,
die Steuerung dafür konfiguriert ist, einen Steuerungsmodus aus wenigstens zwei gespeicherten Steuerungsmodi in Abhängigkeit von wenigstens einem anderen Parameter als Fluidgeschwindigkeit oder Schaufelgeschwindigkeit oder in Abhängigkeit von einer Anwendereingabe auszuwählen, und,

für wenigstens einige Azimutpositionen und wenigstens eine Fluidgeschwindigkeit und/oder Schnelllaufzahl, sich die Schaufelsteigung in Abhängigkeit von der Azimutposition für einen ersten der Steuerungsmodi von derjenigen für einen zweiten der Steuerungsmodi unterscheidet.

2. Steuerung nach Anspruch 1, die ferner sowohl für den ersten als auch für den zweiten Steuerungsmodus dafür konfiguriert ist, die Steigung jeder Schaufel in Abhängigkeit von wenigstens einem von Folgendem zu steuern: Rotor- oder Schaufelgeschwindigkeit oder -schnelligkeit, Fluidgeschwindigkeit oder -richtung, Schnelllaufzahl.

3. Steuerung nach Anspruch 1 oder 2, wobei wenigstens eines von a), b) oder c) gilt:

a) jeder der wenigstens zwei Steuerungsmodi ist dafür konfiguriert, die Steigung jeder Schaufel über einen Bereich von Fluidgeschwindigkeiten, zum Beispiel Windgeschwindigkeiten, von null bis zu einer betrieblichen Fluidgeschwindigkeitsgrenze der Turbine zu steuern,
b) jeder der wenigstens zwei Steuerungsmodi ist dafür konfiguriert, die Steigung jeder Schaufel über einen Bereich von Schnelllaufzahlen von null bis zu der maximalen Schnelllaufzahl der Turbine zu steuern,
c) der erste der wenigstens zwei gespeicherten Steuerungsmodi umfasst einen ersten Anlaufmodus und einen ersten Laufmodus und der zweite der Steuerungsmodi umfasst einen zweiten Anlaufmodus und einen zweiten Laufmodus.

4. Steuerung nach einem der vorhergehenden Ansprüche, die ferner dafür konfiguriert ist, einen der wenigstens zwei gespeicherten Steuerungsmodi in Abhängigkeit von einem Zeitparameter auszuwählen, wobei der Zeitparameter wenigstens eines von einer Tageszeit, einem Wochentag oder einer Jahreszeit umfasst.

5. Steuerung nach einem der vorhergehenden Ansprüche, die ferner konfiguriert ist, einen der wenigstens zwei gespeicherten Steuerungsmodi in Abhängigkeit von einer Ausgabe von einem Sensor auszuwählen, wobei
wahlweise:

der Sensor wenigstens eines von Folgendem umfasst: einen Umweltsensor, einen Wettersensor, einen akustischen Sensor, einen Lichtsensor, einen Eissensor oder einen Verschleißsensor und
ferner wahlweise:
der Wettersensor wenigstens eines von einem Temperatursensor, einem Luftdrucksensor, einem Niederschlagssensor, einem Feuchtigkeitssensor, einem Windgeschwindigkeits- oder -richtungssensor umfasst.

6. Steuerung nach einem der vorhergehenden Ansprüche, wobei wenigstens einer der wenigstens zwei gespeicherten Steuerungsmodi dafür konfiguriert ist eine Randbedingung zu wenigstens einem von Folgendem zu erfüllen: Drehgeschwindigkeit, Energieerzeugung, Drehmoment, akustisches Geräusch.

7. Steuerung nach einem der vorhergehenden Ansprüche, wobei der erste der wenigstens zwei gespeicherten Steuerungsmodi eine zu dem zweiten der Steuerungsmodi entgegengesetzte Drehrichtung des Rotors hat.

8. Steuerung nach einem der vorhergehenden Ansprüche, die ferner konfiguriert ist, einen der wenigstens zwei Steuerungsmodi in Abhängigkeit von wenigstens einem Umweltparameter auszuwählen, und wahlweise:
   der Umweltparameter wenigstens eines von Folgendem umfasst: Temperatur, Luftdruck, Niederschlag, Feuchtigkeit, Fluidgeschwindigkeit oder -schnelligkeit.

9. Steuerung nach einem der vorhergehenden Ansprüche, die ferner konfiguriert ist, einen der wenigstens zwei Steuerungsmodi in Abhängigkeit von einem Zustand wenigstens eines Bauteils der Turbine, wahlweise in Abhängigkeit von einem Verschleißniveau des wenigstens einen Bauteils, auszuwählen.

10. Steuerung nach einem der vorhergehenden Ansprüche, wobei jeweils die Steigung jeder Schaufel um wenigstens ± 180° drehbar ist.

11. Steuerung nach einem der vorhergehenden Ansprüche, wobei wenigstens eines von a), b) oder c) gilt:

    a) die Steuerung umfasst ferner einen Speicher, der wenigstens einen der gespeicherten Steuerungsmodi und/oder wenigstens ein Modus-Auswahlkriterium speichert,
    b) die gespeicherten Steuerungsmodi und/oder das wenigstens eine Auswahlkriterium werden in Abhängigkeit von wenigstens einer Eigenschaft des Standortes, an dem die Turbine installiert ist, ausgewählt,
    c) die Steuerung ist dafür konfiguriert, die Drehrichtung des Rotors durch Betätigung wenigstens einer Stelleinrichtung umzukehren, wobei jede Stelleinrichtung funktionsfähig ist, um die Steigung wenigstens einer Schaufel zu ändern.

12. Steuerung nach einem der vorhergehenden Ansprüche, wobei wenigstens einer der gespeicherten Steuerungsmodi dafür konfiguriert ist, eine Drehgeschwindigkeit des Rotors zu steuern, um Schattenschlag zu vermeiden.

13. Steuerung nach einem der vorhergehenden Ansprüche, wobei wenigstens einer der gespeicherten Steuerungsmodi und/oder wenigstens ein Modus-Auswahlkriterium in Abhängigkeit von wenigstens einem von einer Standorttopographie, dem Vorhandensein eines Gebäudes, dem Vorhandensein eines Hindernisses ausgewählt wird.

14. Verfahren zum Steuern einer Vertikalachsenturbine, wobei die Turbine einen Rotor umfasst, der mehrere Luftflügel- oder Wasserflügelschaufeln umfasst, die für eine Drehung um eine Achse des Rotors angeordnet sind, und das Verfahren Folgendes umfasst:

    für jeden von wenigstens zwei Steuerungsmodi, Steuern der Steigung jeder Schaufel in Abhängigkeit von einem jeweiligen Steuerungsmodus-Algorithmus, wobei der Steuerungsmodus-Algorithmus dafür konfiguriert ist, die Steigung jeder Schaufel wiederholt während jeder Drehung des Rotors in Abhängigkeit von einer Azimutposition für diese Schaufel und in Abhängigkeit von wenigstens einem von Fluidgeschwindigkeit, Fluidschnelligkeit, Schaufelgeschwindigkeit, Schaufelschnelligkeit und Schnelllaufzahl zu steuern,
    Auswählen eines Steuerungsmodus aus wenigstens zwei gespeicherten Steuerungsmodi in Abhängigkeit von wenigstens einem anderen Parameter als Fluidgeschwindigkeit oder Schaufelgeschwindigkeit oder in Abhängigkeit von einer Anwendereingabe und
    wobei, für wenigstens einige Azimutpositionen und wenigstens eine Fluidgeschwindigkeit und/oder Schnelllaufzahl, sich die Schaufelsteigung in Abhängigkeit von der Azimutposition für einen ersten der Steuerungsmodi von derjenigen für einen zweiten der Steuerungsmodi unterscheidet.

15. Vertikalachsen-Turbinenvorrichtung, die Folgendes umfasst:

    einen Rotor, der mehrere Luftflügel- oder Wasserflügelschaufeln umfasst, die für eine Drehung um eine Achse des Rotors angeordnet sind, und
    eine Steuerung, die dafür konfiguriert ist, für jeden von wenigstens zwei Steuerungsmodi, die Steigung jeder Schaufel in Abhängigkeit von einem jeweiligen Steuerungsmodus-Algorithmus zu steuern, wobei der Steuerungsmodus-Algorithmus dafür konfiguriert ist, die Steigung jeder Schaufel wiederholt während jeder Drehung des Rotors in Abhängigkeit von einer Azimutposition für diese Schaufel und in Abhängigkeit von wenigstens einem von Fluidgeschwindigkeit, Fluidschnelligkeit, Schaufelgeschwindigkeit, Schaufelschnelligkeit und Schnelllaufzahl zu steuern, wobei:

die Steuerung dafür konfiguriert ist, einen Steuerungsmodus aus wenigstens zwei gespeicherten Steuerungsmodi in Abhängigkeit von wenigstens einem anderen Parameter als Fluidgeschwindigkeit oder Schaufelgeschwindigkeit oder in Abhängigkeit von einer Anwendereingabe auszuwählen, und,
für wenigstens einige Azimutpositionen und wenigstens eine Fluidgeschwindigkeit und/oder Schnelllaufzahl, sich die Schaufelsteigung in Abhängigkeit von der Azimutposition für einen ersten Steuerungsmodus von derjenigen für einen zweiten Steuerungsmodus unterscheidet.

## Revendications

1. Dispositif de commande pour une turbine à axe vertical,
la turbine comprenant un rotor comprenant une pluralité de pales à profil aérodynamique ou hydrodynamique agencées en vue d'une rotation autour d'un axe du rotor, dans lequel :

le dispositif de commande est configuré, pour chacun parmi au moins deux modes de commande, de manière à commander le pas de chaque pale en fonction d'un algorithme de mode de commande respectif, dans lequel l'algorithme de mode de commande est configuré de manière à commander le pas de chaque pale de manière répétée pendant chaque rotation du rotor en fonction d'une position azimutale de ladite pale et en fonction d'au moins une parmi une vitesse de fluide, une vélocité de fluide, une vitesse de pale, une vélocité de pale, et une vitesse spécifique ;
le dispositif de commande est configuré de manière à sélectionner un mode de commande parmi au moins deux modes de commande stockés en fonction d'au moins un paramètre autre que la vitesse de fluide ou la vitesse de pale, ou en fonction d'une entrée d'utilisateur ; et
pour au moins certaines positions azimutales et au moins une vitesse de fluide et/ou une vitesse spécifique, le pas de pale qui est fonction de la position azimutale est différent pour un premier parmi les modes de commande par rapport à un deuxième parmi les modes de commande.

2. Dispositif de commande selon la revendication 1, configuré en outre, pour chacun parmi les premier et deuxième modes de commande, de manière à commander le pas de chaque pale en fonction d'au moins une parmi : vitesse ou vélocité de rotor ou de pale, vitesse ou direction de fluide, vitesse spécifique.

3. Dispositif de commande selon la revendication 1 ou 2, dans lequel est vérifié au moins un parmi a), b) ou c) :

a) chacun parmi les au moins deux modes de commande est configuré de manière à commander le pas de chaque pale à l'intérieur d'une plage de vitesses de fluide, par exemple des vitesses de vent, entre une vitesse de fluide nulle et une limite de vitesse de fluide fonctionnelle de la turbine ;
b) chacun parmi les au moins deux modes de commande est configuré de manière à commander le pas de chaque pale à l'intérieur d'une plage de vitesses spécifiques comprise entre zéro et la vitesse spécifique maximale de la turbine ;
c) le premier parmi les au moins deux modes de commande stockés comprend un premier mode de démarrage et un premier mode de fonctionnement, et le deuxième parmi les modes de commande comprend un deuxième mode de démarrage et un deuxième mode de fonctionnement.

4. Dispositif de commande selon l'une quelconque des revendications précédentes, configuré en outre de manière à sélectionner un parmi les au moins deux modes de commande stockés en fonction d'un paramètre temporel, dans lequel le paramètre temporel comprend au moins un parmi un moment de la journée, un jour de la semaine, ou une saison de l'année.

5. Dispositif de commande selon l'une quelconque des revendications précédentes, configuré en outre de manière à sélectionner un parmi les au moins deux modes de commande stockés en fonction d'une sortie en provenance d'un capteur, dans lequel éventuellement :

le capteur comprend au moins un parmi : un capteur de variable environnementale, un capteur météorologique, un capteur acoustique, un capteur de luminosité, une sonde de détection de givrage, ou un capteur d'usure, et éventuellement en outre :
le capteur météorologique comprend au moins un parmi un capteur de température, un capteur de pression barométrique, un capteur de précipitation, un capteur d'humidité, un capteur de vitesse ou de direction de vent.

6. Dispositif de commande selon l'une quelconque des revendications précédentes, dans lequel au moins un parmi les au moins deux modes de commande stockés est configuré de manière à satisfaire une contrainte s'appliquant à au moins un ou une parmi : vitesse de rotation, génération électrique, couple, bruit acoustique.

7. Dispositif de commande selon l'une quelconque des revendications précédentes, dans lequel le premier parmi les au moins deux modes de commande stockés présente une direction de rotation du rotor opposée par rapport au deuxième parmi les modes de commande.

8. Dispositif de commande selon l'une quelconque des revendications précédentes, configuré en outre de manière à sélectionner un parmi les au moins deux modes de commande en fonction d'au moins un paramètre environnemental, et
éventuellement :
le paramètre environnemental comprend au moins une parmi : température, pression barométrique, précipitation, humidité, vitesse ou vélocité de fluide.

9. Dispositif selon l'une quelconque des revendications précédentes, configuré de manière à sélectionner un parmi les au moins deux modes de commande en fonction d'un état d'au moins un composant de la turbine, éventuellement en fonction d'un niveau d'usure dudit au moins un composant.

10. Dispositif de commande selon l'une quelconque des revendications précédentes, dans lequel chacun des pas de chaque pale peut être tourné d'au moins ± 180°.

11. Dispositif de commande selon l'une quelconque des revendications précédentes, dans lequel est vérifié au moins un parmi a), b), ou c) :

a) le dispositif de commande comprend en outre une mémoire stockant au moins un parmi les modes de commande stockés et/ou au moins un critère de sélection de mode ;
b) les modes de commande stockés et/ou au moins un critère de sélection sont sélectionnés en fonction d'au moins une propriété du site sur lequel est installée la turbine ;
c) le dispositif de commande est configuré de manière à inverser la direction de rotation du rotor grâce à une mise en oeuvre d'au moins un dispositif d'actionnement, dans lequel chaque dispositif d'actionnement peut servir à modifier le pas d'au moins une pale.

12. Dispositif de commande selon l'une quelconque des revendications précédentes, dans lequel au moins un parmi les modes de commande stockés est configuré de manière à commander une vitesse de rotation du rotor afin d'éviter un effet stroboscopique.

13. Dispositif de commande selon l'une quelconque des revendications précédentes, dans lequel au moins un parmi les modes de commande stockés et/ou au moins un critère de sélection est ou sont sélectionné(s) en fonction d'au moins une parmi une topographie de site, la présence d'un bâtiment, et/ou la présence d'un obstacle.

14. Procédé de commande d'une turbine à axe vertical, la turbine comprenant un rotor comprenant une pluralité de pales à profil aérodynamique ou hydrodynamique agencées en vue d'une rotation autour d'un axe du rotor, et le procédé comprenant les étapes consistant à :

pour chacun parmi au moins deux modes de commande, commander le pas de chaque pale en fonction d'un algorithme de mode de commande respectif, dans lequel l'algorithme de mode de commande est configuré de manière à commander le pas de chaque pale de manière répétée pendant chaque rotation du rotor en fonction d'une position azimutale pour ladite pale et en fonction d'au moins une parmi une vitesse de fluide, une vélocité de fluide, une vitesse de pale, une vélocité de pale, et une vitesse spécifique ;
sélectionner un mode de commande parmi au moins deux modes de commande stockés en fonction d'au moins un paramètre autre que la vitesse de fluide ou la vitesse de pale, ou en fonction d'une entrée d'utilisateur ; et
pour au moins certaines positions azimutales et au moins une vitesse de fluide et/ou une vitesse spécifique, le pas de pale qui est fonction de la position azimutale est différent pour un premier parmi les modes de commande par rapport à un deuxième parmi les modes de commande.

15. Appareil formant turbine à axe vertical, comprenant :

un rotor comprenant une pluralité de pales à profil aérodynamique ou hydrodynamique agencées en vue d'une rotation autour d'un axe du rotor ; et
un dispositif de commande configuré, pour chacun parmi au moins deux modes de commande, de manière à commander le pas de chaque pale en fonction d'un algorithme de mode de commande respectif, dans lequel l'algorithme de mode de commande est configuré de manière à commander le pas de chaque pale de manière répétée pendant chaque rotation du rotor en fonction d'une position azimutale pour ladite pale et en fonction d'au moins une parmi une vitesse de fluide, une vélocité de fluide, une vitesse de pale, une vélocité de pale et une vitesse spécifique, dans lequel :

le dispositif de commande est configuré de manière à sélectionner un mode de commande parmi au moins deux modes de commande stockés en fonction d'au moins un paramètre autre que la vitesse de fluide ou la vitesse de pale, ou en fonction d'une entrée d'utilisateur ; et

pour au moins certaines positions azimutales et au moins une vitesse de fluide et/ou une vitesse spécifique, le pas de pale qui est fonction de la position azimutale est différent pour un premier mode de commande par rapport à un deuxième mode de commande.

Fig. 1

Fig. 2

Fig. 3

Fig. 4a

Fig. 4b

VIEWING
PLANE

WIND
DIRECTION

WIND
DIRECTION

**Fig. 5b**

VIEWING
PLANE

WIND
DIRECTION

WIND
DIRECTION

**Fig. 5a**

Fig. 6b

Fig. 6a

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100133819 A1